# EUROPÄISCHE PATENTSCHRIFT

(11) **EP 0 723 509 B1**
(45) Veröffentlichungstag und Bekanntmachung des Hinweises auf die Patenterteilung: **02.09.1998**
(21) Anmeldenummer: 94930954.6
(22) Anmeldetag: 15.10.1994
(51) Int. Cl.: B62D 5/08

(54) **HILFSKRAFTLENKUNG FÜR KRAFTFAHRZEUGE**
POWER-ASSISTED STEERING SYSTEM FOR MOTOR VEHICLES
DIRECTION ASSISTEE POUR VEHICULES AUTOMOBILES

(30) Priorität: 20.10.1993 DE 4335755
(43) Veröffentlichungstag der Anmeldung: 31.07.1996
(73) Patentinhaber: ZF FRIEDRICHSHAFEN Aktiengesellschaft, 88038 Friedrichshafen (DE)
(72) Erfinder: FASSBENDER, Rolf, D-73557 Mutlangen (DE); LANG, Armin, D-73529 Schwäbisch Gmünd (DE); KNÖDLER, Helmut, D-73547 Lorch (DE)
(86) Internationale Anmeldenummer: EP9403402
(87) Internationale Veröffentlichungsnummer: WO9511153

(56) Entgegenhaltungen:
- WO-A-94/19226
- DE-A- 4 126 020

## Beschreibung

Die Erfindung betrifft eine Hilfskraftlenkung für Kraftfahrzeuge nach dem Oberbegriff des Anspruchs 1. Die Hilfskraftlenkung enthält ein Lenkventil, das zwei Einlaß-Sitzventile und zwei Auslaß-Sitzventile aufweist, die über eine Betätigungseinrichtung in Abhängigkeit von einer Drehbewegung einer Lenkspindel verstellbar sind. Die Schließkörper der Einlaß-Sitzventile sind durch die Kraft von Zuhaltefedern in Schließrichtung beaufschlagbar, so daß die Einlaß-Sitzventlle in der Neutralstellung des Lenkventils geschlossen sind. Die Auslaß-Sitzventile sind in der Neutralstellung des Lenkventils geöffnet. Die Einlaß-Sitzventile werden erst nach dem Schließen des jeweiligen zugehörigen Auslaß-Sitzventils geöffnet.

Eine derartige sogenannte "Hilfskraftlenkung mit geschlossener Mitte" ist bekannt aus der DE-A1-41 26 020. Eine solche Hilfskraftlenkung weist einen linearen Kennlinienverlauf auf. Dies bedeutet, daß bei hohen Servodrücken das Betätigungsmoment stark ansteigen kann.

Bei heute gebräuchlichen Hilfskraftlenkungen mit offener Mitte ist es jedoch üblich, das Betätigungsmoment ab einem bestimmten Druck im Servomotor nur noch unwesentlichzu erhöhen. Dies bedeutet, daß die Kennlinie ab diesem bestimmten Punkt steiler verläuft. Man nennt diesen Effekt "Abschneidung" oder "Betätigungsmomentbegrenzung".

Der Erfindung liegt die Aufgabe zugrunde, eine gattungsgemäße Hilfskraftlenkung, d. h. eine Hilfskraftlenkung mit geschlossener Mitte, derart zu verbessern, daß mit ihrem Lenkventil Kennlinien erzeugt werden können, die in ihrer Form den Kennlinien heute gebräuchlicher Hilfskraftlenkungen mit offener Mitte möglichst nahe kommen.

Diese Aufgabe wird durch die in den Ansprüchen 1 und/oder 2 gekennzeichnete Hilfskraftlenkung gelöst. Die Lösung liegt darin, daß bei einer gattungsgemäßen Hilfskraftlenkung für jede Seite des Lenkventils ein Begrenzungskolben vorgesehen ist, der einerseits von dem in einem Arbeitsraum eines Servomotors herrschenden Servodruck und andererseits von einer Begrenzungsfeder beaufschlagt ist. Diese Begrenzungsfeder hält den Begrenzungskolben unterhalb einer bestimmten Schwelle des Servodruckes in einem bestimmten Abstand von der Betätigungseinrichtung bzw. von Teilen, die mit dieser in Wirkverbindung stehen. Dadurch bleiben bis zu dieser Schwelle die Betätigungsmomente unbeeinflußt. Wenn die Kraft des auf den Begrenzungskolben wirkenden Servodruckes die Kraft der Begrenzungsfeder übersteigt, wirkt der Begrenzungskolben direkt oder indirekt auf die Betätigungseinrichtung im Sinne einer Verminderung der Betätigungskraft ein.

Wesentlich ist dabei, daß unterhalb der besagten Schwelle der ansteigende Kennlinienverlauf allein durch den wirksamen Querschnitt des Schließkörpers des Einlaß-Sitzventils bestimmt ist und oberhalb dieser Schwelle, wenn der Begrenzungskolben direkt oder indirekt - beispielsweise über den Schließkörper des Auslaß-Sitzventils - auf die Betätigungseinrichtung wirkt, um den Querschnitt des Begrenzungskolbens entsprechend steiler verläuft. Die Steigung dieses Kennlinienastes ergibt sich also aus der wirksamen Flächendifferenz zwischen Schließkörper des Einlaß-Sitzventils und Begrenzungskolben. Beim Zurücklenken öffnet dagegen das Auslaß-Sitzventil erst dann, wenn unter Vernachlässigung der mechanischen Zentrierkräfte die Betätigungskraft unter die auf den wirksamen Querschnitt des Schließkörpers des Auslaß-Sitzventils, vermindert um den Querschnitt des Begrenzungskolbens, wirkende hydraulische Kraft abgefallen ist. Unterhalb besagter Schwelle, wenn der Begrenzungskolben nicht mehr auf die Betätigungseinrichtung wirkt, bestimmt nur noch der wirksame Querschnitt des Schließkörpers des Auslaß-Sitzventils die Kennliniensteigung.

Eine sichere Funktion des Ventils ist also nur gewährleistet, wenn für den ansteigenden Kennlinienast der wirksame Querschnitt des Begrenzungskolbens kleiner ausgeführt ist als der wirksame Querschnitt des Schließkörpers des Einlaß-Sitzventils, und für den abfallenden Kennlinienast die hydraulische Kraft, resultierend aus dem maximalen Systemdruck und der wirksamen Querschnittsdifferenz aus Begrenzungskolben minus Schließkörper des Auslaß-Sitzventils, kleiner als die mechanischen Zentrierkräfte ist.

Eine negative Steigung des abfallenden Kennlinienastes wird vermieden, wenn der wirksame Querschnitt des Begrenzungskolbens kleiner ist, als der wirksame Querschnitt des Schließkörpers des Auslaß-Sitzventils. Damit wird eine Unstetigkeit im Lenkgefühl vermieden.

Wesentlich ist dabei, daß der Begrenzungskolben entweder direkt oder indirekt auf die Betätigungseinrichtung wirkt und nicht auf den Schließkörper des Einlaß-Sitzventils. Dies ergibt eine sehr einfache, konstruktive Lösung.

Zweckmäßige und vorteilhafte Ausgestaltungen der Erfindung sind in den Unteransprüchen angegeben.

In einer bevorzugten Ausführungsform wird der Begrenzungskolben durch die Begrenzungsfeder in der Neutralstellung des Lenkventils in Anlage an einer Anschlagschulter eines Ventilgehäuses gehalten. Dadurch läßt sich der Druck, bei dem der Begrenzungskolben anfängt sich zu bewegen, genau definieren.

Im folgenden wird die Erfindung anhand dreier in der Zeichnung dargestellter Ausführungsbeispiele näher erläutert.
Es zeigen:
- Fig. 1 und 2: einen Längsschnitt durch das Lenkventil der erfindungsgemäßen Hilfskraftlenkung mit schematisch dargestellten Aggregaten der Lenkung in zwei Ausführungsbeispielen und
- Fig. 3: einen Längsschnitt durch ein drittes Ausführungsbeispiel der erfindungsgemäßen Hilfskraftlenkung am Beispiel einer Zahnstangen-Hilfskraftlenkung.

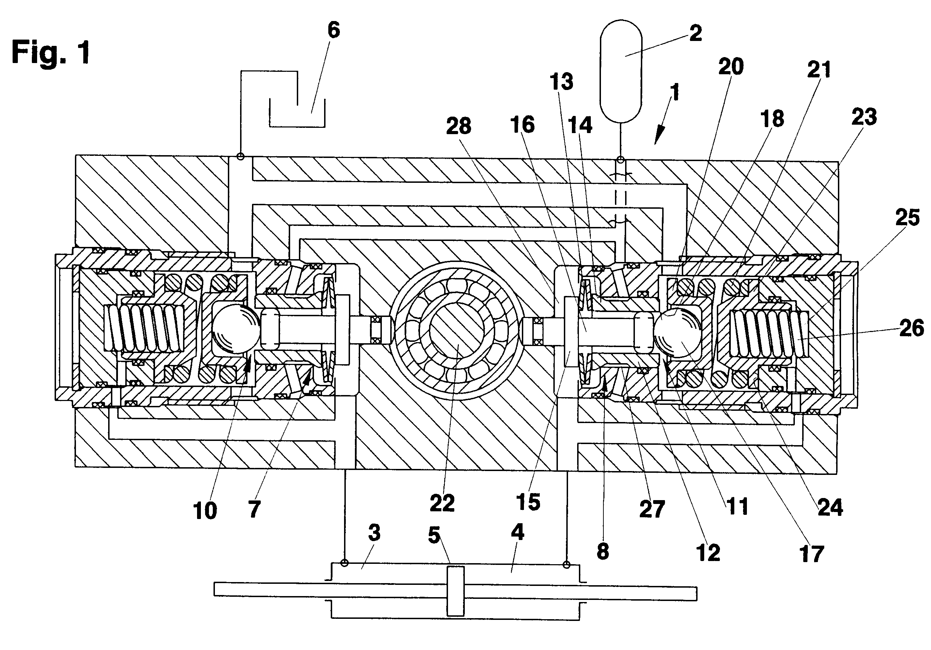

Die erfindungsgemäße Hilfskraftlenkung nach Fig. 1 enthält ein Lenkventil 1. Das Lenkventil 1 steuert das Druckmittel, das von einer nicht dargestellten Servopumpe gefördert und zweckmäßigerweise in einem Speicher 2 gespeichert wird, zu und von den Druckräumen 3 und 4 eines Servomotors 5 und zurück zu einem Druckmittelbehälter 6. Das Lenkventil 1 enthält zwei Einlaß-Sitzventile 7 und 8 und zwei Auslaß-Sitzventile 10 und 11. Jeweils ein Einlaß-Sitzventil 7 bzw. 8 und ein Auslaß-Sitzventil 10 bzw. 11 sind koaxial zueinander angeordnet.

Die beiden Teile des Lenkventils 1 mit je einem Einlaß-Sitzventil 7 bzw. 8 und je einem Auslaß-Sitzventil 10 bzw. 11 sind im wesentlichen gleich ausgebildet. Der genauere Aufbau des Lenkventils 1 wird deshalb im folgenden anhand nur eines Teiles - in Fig. 1 der rechte Teil - des Lenkventils 1 mit dem Einlaß-Sitzventil 8 und dem Auslaß-Sitzventil 11 beschrieben.

In der Neutralstellung des Lenkventils 1 ist das Einlaß-Sitzventil 8 geschlossen. Dies wird dadurch erreicht, daß dessen Schließkörper 12 durch die Kraft einer Zuhaltefeder 13 in der Form von einer oder zwei Tellerfedern in Schließrichtung gegen einen gehäusefesten Ventilsitz 14 beaufschlagbar ist. Die Zuhaltefeder 13 stützt sich einerseits an dem Schließkörper 12 und andererseits an einem Bund 15 eines Betätigungsstößels 16 ab. An dem Betätigungsstößel 16 liegt ein Schließkörper 17 des Auslaß-Sitzventils 11 an, der mit einem an dem Schließkörper 12 angeordneten Ventilsitz 18 zusammenwirkt. Der Schließkörper 17 ist als Kugel ausgebildet. Er kann jedoch andere, passende Formen aufweisen (z. B. Kegel).

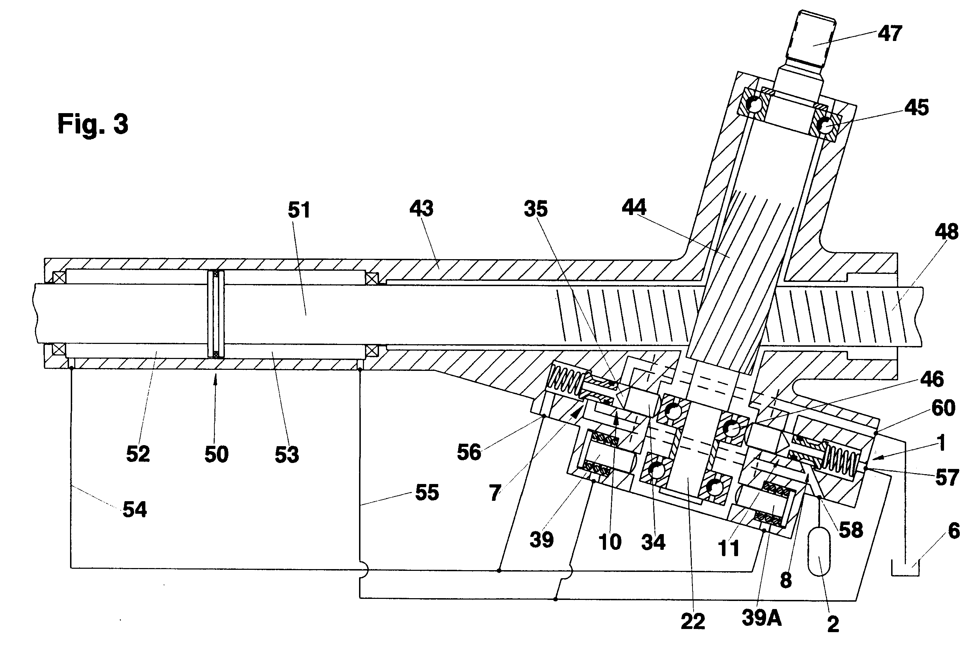

Der Schließkörper 17 wird über einen Federteller 20 durch eine Begrenzungsfeder 21 in Anlage an dem Betätigungsstößel 16 gehalten und damit indirekt an einer Betätigungseinrichtung 22. Die Betätigungseinrichtung 22 kann in Abhängigkeit von einer Drehbewegung einer nicht dargestellten Lenkspindel bewegt werden. Die Betätigungseinrichtung 22 steht beispielsweise in trieblicher Verbindung mit einem nicht dargestellten Ritzel einer Zahnstangenlenkung. (Eine solche Anordnung wird anhand der Fig. 3 weiter unten beschrieben.)

Zusätzlich zu dem Einlaß-Sitzventil 7, 8 und dem Auslaß-Sitzventil 10, 11 ist auf jeder Seite des Lenkventils 1 ein Begrenzungskolben 23 vorgesehen. Der Begrenzungskolben 23 ist auf seiner einen Seite, die dem Einlaß-Sitzventil 8 und dem Auslaß-Sitzventil 11 zugewandt ist, von der Begrenzungsfeder 21 beaufschlagt. Dies bedeutet, daß die Begrenzungsfeder 21 zwischen dem Federteller 20 und dem Begrenzungskolben 23 eingespannt ist. Die Begrenzungsfeder 21 wirkt außerdem - wenn das Auslaß-Sitzventil 11 geschlossen ist - als Öffnungsfeder auf den Schließkörper 12 des Einlaß-Sitzventils 8.

Der Begrenzungskolben 23 wird gegenüber dem Federteller 20 des Schließkörpers 17 durch die Begrenzungsfeder 21 in einem gewissen Abstand gehalten und gegen eine Anschlagschulter 24 gedrückt, die gehäusefest in dem Lenkventil 1 angeordnet ist.

Auf seiner, der Begrenzungsfeder abgewandten Seite ist der Begrenzungskolben 23 von einem Druck beaufschlagt, der in einem angrenzenden Begrenzungsraum 25 herrscht. Der Begrenzungsraum 25 ist verbunden mit dem Arbeitsraum 4 des Servomotors 5, so daß in dem Begrenzungsraum 25 jeweils der gleiche Druck herrscht wie in dem Arbeitsraum 4. In der Neutralstellung des Lenkventils ist die Kraft der Begrenzungsfeder 21 größer als die Kraft des in dem Begrenzungsraum 25 herrschenden Druckes. Damit wird der Begrenzungskolben 23 in der Neutralstellung des Lenkventils 1 in Anlage gehalten an der Anschlagschulter 24. Der Abstand zwischen dem Begrenzungskolben 23 und dem Federteller 20 wird erst überbrückt, wenn der Begrenzungskolben 23 durch den in dem Begrenzungsraum 25 herrschenden Servodruck gegen die Kraft der Begrenzungsfeder 21 in Richtung auf den Federteller 20 verschoben wird. Der wirksame Querschnitt des Begrenzungskolbens 23, der von dem in dem Begrenzungsraum 25 herrschenden Servodruck beaufschlagt wird, ist kleiner als der wirksame Querschnitt des Schließkörpers 12 des Einlaß-Sitzventils 8. In dem Begrenzungsraum 25 ist eine Druckbegrenzungsfeder 26 angeordnet, die den Begrenzungskolben 23 in Richtung auf das Auslaß-Sitzventil 11 beaufschlagt, da nach Anlage des Begrenzungskolbens 23 am Federteller 20 die Begrenzungsfeder 21 nicht mehr als Öffnungsfeder für das Einlaß-Sitzventil 8 wirkt. Die Druckbegrenzungsfeder 26 bestimmt den Maximaldruck im Servomotor. Er ist erreicht, wenn die auf die wirksame Differenzfläche aus Schließkörper 12 des Einlaß-Sitzventils 8 und Begrenzungskolben 23 wirkende hydraulische Kraft der Kraft der Druckbegrenzungsfeder 26 die Waage hält.

Der Speicher 2 steht über entsprechende Kanäle mit einer Zulaufkammer 27 in Verbindung, die an dem Einlaß-Sitzventil 8 angeordnet ist. Eine Kammer 28, die die Zuhaltefeder 13 enthält und die in der Neutralstellung des Lenkventils 1 von der Zulaufkammer 27 getrennt ist, steht mit dem Arbeitsraum 4 des Servomotors 5 in Verbindung, so daß in der Kammer 28 der gleiche Druck herrscht wie in dem Begrenzungsraum 25. Die Kammer 28 steht außerdem über das in der Neutralstellung des Lenkventils 1 offene Auslaß-Sitzventil 11 und entsprechende Kanäle mit dem Druckmittelbehälter 6 in Verbindung.

Im folgenden wird die Funktion des ersten Ausführungsbeispiels der erfindungsgemäßen Hilfskraftlenkung beschrieben: Wird durch eine Drehung des nicht dargestellten Lenkhandrades die Betätigungseinrichtung 22 beispielsweise nach links bewegt, so schließt zunächst das Auslaß-Sitzventil 11 durch die Kraft der Begrenzungsfeder 21. Der Schließkörper 17 des Auslaß-Sitzventils 11 nimmt bei seiner weiteren Bewegung den Schließkörper 12 des Einlaß-Sitzventils 8 mit, so daß dieses Ventil öffnet. Das unter Druck stehende Druckmittel strömt aus der Zulaufkammer 27 in die Kammer 28 und damit sowohl in den Arbeitsraum 4 als auch in den Begrenzungsraum 25. Der in der Kammer 28 herrschende Druck wirkt als Rückwirkungsdruck auf den Schließkörper 12 des Einlaß-Sitzventils 8 und wirkt damit der Betätigungskraft der Betätigungseinrichtung 22 entgegen. Der in dem Begrenzungsraum 25 herrschende Druck drückt den Begrenzungskolben 23 gegen die Kraft der Begrenzungsfeder 21 in Fig. 1 nach links. Überschreitet diese Druckkraft die Vorspannkraft der Begrenzungsfeder 21, so bewegt sich der Begrenzungskolben 23 nach links und drückt über den Federteller 20 den Schließkörper 17 und den Betätigungsstößel 16 auf die Betätigungseinrichtung 22. Sie wirkt gleichsinnig, wie die Betätigungskraft und verringert dadurch die zum Verstellen der Betätigungseinrichtung 22 erforderliche Handkraft.

Wird anschließend die Kraft an der Betätigungseinrichtung 22 weiter vermindert, so bleibt der Druck in dem Arbeitsraum 4 so lange eingesperrt, bis die mechanischen Zentrierkräfte und die hydraulische Kraft an dem Schließkörper 17 des Auslaß-Sitzventils 11, vermindert um die hydraulische Kraft am Begrenzungskolben 23 die eingeleitete Kraft an der Betätigungseinrichtung 22 überwindet und das Auslaß-Sitzventil 11 öffnet.

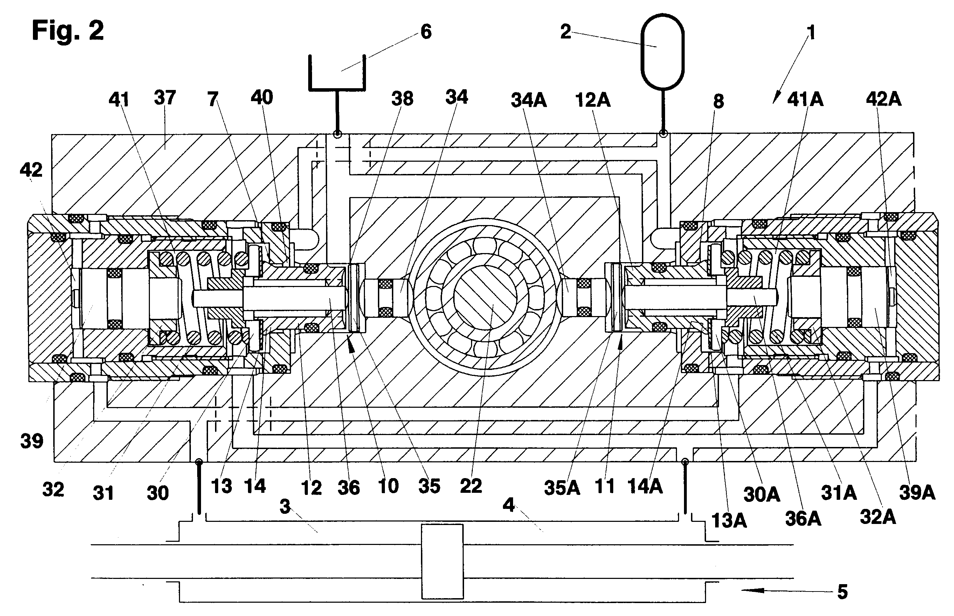

Das in Fig. 2 dargestellte zweite Ausführungsbeispiel hat mit dem ersten Ausführungsbeispiel gemeinsam, daß der Begrenzungskolben auf den Schließkörper eines Auslaß-Sitzventils und damit über einen Betätigungsstößel auf die Betätigungseinrichtung wirkt.

Die Unterschiede der beiden Ausführungsbeispiele bestehen darin, daß beim ersten Ausführungsbeispiel das Auslaß-Sitzventil und das Einlaß-Sitzventil durch die Kraft der Begrenzungsfeder verstellt werden, während beim zweiten Ausführungsbeispiel die beiden Sitzventile formschlüssig direkt durch die Bewegung der Betätigungseinrichtung verstellt werden. Man kann beim ersten Ausführungsbeispiel von einer passiven Betätigung und bei dem zweiten Ausführungsbeispiel von einer aktiven Betätigung des Lenkventils sprechen.

Außerdem wirkt beim ersten Ausführungsbeispiel der Begrenzungskolben 23 über das Auslaß-Sitzventil 11 der aktivierten Ventilseite auf die Betätigungseinrichtung 22, während beim zweiten Ausführungsbeispiel der Begrenzungskolben 39A über das Auslaß-Sitzventil 35A der nicht aktivierten Ventilseite auf die Betätigungseinrichtung 22 wirkt.

Die Grundelemente des Lenkventils 1, wie die beiden Einlaß-Sitzventile 7 und 8 und die beiden Auslaß-Sitzventile 10 und 11 sind bei beiden Ausführungsbeispielen vorhanden. Durch die Umkehrung der Betätigungsart sind die beiden Sitzventile umgekehrt angeordnet. Auch bei dem zweiten Ausführungsbeispiel gilt, daß die beiden Teile des Lenkventils 1 symmetrisch zueinander ausgebildet sind. Der genauere Aufbau des Lenkventils 1 wird deshalb auch bei diesem Ausführungsbeispiel im wesentlichen nur anhand eines Teiles - in Fig. 2 der linke Teil - des Lenkventils 1 mit dem Einlaß-Sitzventil 7 und dem Auslaß-Sitzventil 10 beschrieben. Einander entsprechende Teile der beiden Figuren werden mit gleichen Bezugszeichen versehen.

In der Neutralstellung des Lenkventils 1 ist das Einlaß-Sitzventil 7 geschlossen. Dies wird dadurch erreicht, daß dessen Schließkörper 12 durch die Kraft der Zuhaltefeder 13 in der Form einer Tellerfeder in Schließrichtung gegen einen gehäusefesten Ventilsitz 14 beaufschlagbar ist. Die Zuhaltefeder 13 stützt sich einerseits an dem Schließkörper 12 und andererseits an einem Federteller 30 ab. Der Federteller 30 wird auf seiner der Zuhaltefeder 13 abgewandten Seite von einer Begrenzungsfeder 31 beaufschlagt, die sich auf ihrer anderen Seite über eine Scheibe 32 an dem Begrenzungskolben 39 abstützt.

Ausgehend von der Betätigungseinrichtung 22 sind an dem Auslaß-Sitzventil 10 hintereinander folgende Bauelemente angeordnet: Ein Betätigungsstößel 34, ein scheibenförmiger Schließkörper 35 und ein Betätigungsstift 36. Der Betätigungsstößel 34 ist dichtend in einem Ventilgehäuse 37 geführt. Der Schließkörper 35 des Auslaß-Sitzventils 10 wirkt mit einem an dem Schließkörper 12 angeordneten Ventilsitz 38 zusammen. Der Betätigungsstift 36 ist in dem Federteller 30 nur in Richtung auf die Betätigungseinrichtung 22 verschiebbar und wird über den Federteller 30 durch die Begrenzungsfeder 31 in ständiger Anlage an dem Schließkörper 35 gehalten. Durch die Scheibe 32 wird ein Begrenzungskolben 39 in einem bestimmten Abstand von dem Betätigungsstift 36 gehalten. Der Begrenzungskolben 39 ist durch den Servodruck in einem angrenzenden Begrenzungsraum 42 in Anlage an der Scheibe 32 gehalten.

Der Speicher 2 steht über entsprechende Kanäle mit einer Zulaufkammer 40 in Verbindung, die an dem Einlaß-Sitzventil 7 angeordnet ist. Eine Kammer 41, die die Zuhaltefeder 13 enthält und die in der Neutralstellung des Lenkventils 1 von der Zulaufkammer 40 getrennt ist, steht mit dem Arbeitsraum 4 des Servomotors 5 in Verbindung. Mit dieser Kammer 41 und mit dem Arbeitsraum 4 steht ein Begrenzungsraum 42A in Verbindung, der auf der rechten Seite des Lenkventils 1 benachbart zu dem dort angeordneten Begrenzungskolben 39A liegt. Der auf der linken Seite des Lenkventils 1 benachbart zu dem Begrenzungskolben 39 angeordnete Begrenzungsraum 42 ist entsprechend mit dem Arbeitsraum 3 des Servomotors 5 und mit der im rechten Teil des Lenkventils 1 angeordneten Kammer 41A verbunden. Diese "Überkreuz-Verbindung" der Begrenzungskammern 42 und 42A mit den Kammern 41 und 41A ergibt sich aus der Umkehrung der beiderseitigen Einlaß- und Auslaß-Sitzventile.

Auch bei diesem Ausführungsbeispiel ist unterhalb der bestimmten Schwelle des Servodruckes die Kraft der Begrenzungsfeder 31 größer als die Kraft des auf den Begrenzungskolben 39 wirkenden Servodruckes. Damit wird der Begrenzungskolben 39 in einem Abstand gehalten von dem Betätigungsstift 36 und damit indirekt von der Betätigungseinrichtung 22. Dieser Abstand wird erst dann überbrückt, wenn der Begrenzungskolben 39 durch den in dem Begrenzungsraum 42 herrschenden Druck gegen die Kraft der Begrenzungsfeder 31 in Richtung auf den Schließkörper 35 verschoben wird. Der wirksame Querschnitt des Begrenzungskolbens 39, der von dem in dem Begrenzungsraum 42 herrschenden Druck beaufschlagt wird, ist kleiner als der wirksame Querschnitt des Schließkörpers 12 des Einlaß-Sitzventils 8.

Im folgenden wird die Funktion des zweiten Ausführungsbeispieles der erfindungsgemäßen Hilfskraftlenkung beschrieben: Wird wie bei dem ersten Ausführungsbeispiel die Betätigungseinrichtung 22 nach links bewegt, so wird über den Betätigungsstößel 34, den Schließkörper 35, den Betätigungsstift 36 und den Federteller 30 die Begrenzungsfeder 31 weiter vorgespannt. Sobald der Schließkörper 35 an dem Ventilsitz 38 des Schließkörpers 12 anliegt, öffnet das Einlaß-Sitzventil 7. Der Druck in der Kammer 41 und in dem Arbeitsraum 4 des Servomotors 5 steigt an. Außer der Kraft der Begrenzungsfeder 31 wirkt in Schließrichtung auf den Schließkörper 12 des Einlaß-Sitzventils 7 eine hydraulische Kraft der Größe: Druck in der Kammer 41 mal wirksamer Querschnitt des Einlaß-Sitzventils 7, wodurch die Betätigungskraft linear mit dem Servodruck ansteigt.

Der Druck in der Kammer 41 herrscht ebenso in dem Begrenzungsraum 42A. Der Begrenzungskolben 39A wird über die Begrenzungsfeder 31A und die Scheibe 32A zunächst in einer solchen Lage gehalten, daß er den Betätigungsstift 36A nicht berührt. Sobald der auf den Begrenzungskolben 39A wirkende Druck die Vorspannkraft der Begrenzungsfeder 31A übersteigt, bewegt sich der Begrenzungskolben 39A nach links und drückt nach Überwinden des Abstandes auf den Betätigungsstift 36A und entlastet damit die Betätigungseinrichtung 22.

Von diesem Punkt an wird mit zunehmendem Druck der erforderliche Kraftanstieg an der Betätigungseinrichtung 22 geringer.

Fig. 3 zeigt einen Längsschnitt durch eine Zahnstangen-Hilfskraftlenkung mit einem Lenkventil, das im wesentlichen dem Lenkventil der Fig. 2 entspricht. Auch bei diesem Ausführungsbeispiel werden die beiden Sitzventile formschlüssig direkt durch die Bewegung der Betätigungseinrichtung verstellt. Einander entsprechende Teile der drei Figuren werden auch in dieser Figur mit gleichen Bezugszeichen versehen.

In einem Lenkgehäuse 43 ist ein Ritzel 44 in zwei Lagern 45 und 46 drehbar gelagert. Das Ritzel trägt an seinem einen Ende einen Lenkspindelanschluß 47 für den Anschluß an ein Lenkorgan, beispielsweise eine nicht dargestellte Lenkspindel mit einem Lenkhandrad. Eines der Lager, vorzugsweise das Lager 45, das in der Nähe des Lenkspindelanschlusses 47 liegt, ist als Festlager ausgebildet. Das andere Lager, vorzugsweise das Lager 46, das dem Lenkspindelanschluß 47 abgewandt ist, ist als Loslager ausgebildet. Mit "Loslager" wird hier ein Lager, beispielsweise ein Rillenkugellager, bezeichnet, das zwar in axialer Richtung festgelegt sein kann, in radialer Richtung aber innerhalb bestimmter Grenzen bewegt werden kann.

Das Ritzel 44 steht über seine Verzahnung in Eingriff mit einer Zahnstange 48, die in dem Lenkgehäuse 43 axial verschiebbar geführt ist. Zur Hilfskraftunterstützung dient ein Servomotor 50, dessen Kolbenstange 51 fest mit der Zahnstange 48 verbunden ist. Der Servomotor 50 enthält zwei Arbeitsräume 52 und 53, die über Arbeitsleitungen 54 und 55 mit zwei Arbeitsanschlüssen 56 und 57 des Lenkventils 1 verbunden sind. Das Lenkventil 1 weist außerdem noch einen Zulaufanschluß 58 auf, an den der Speicher 2 angeschlossen ist. An einen Rücklaufanschluß 60 ist der Druckmittelbehälter 6 angeschlossen.

Die beiden Einlaß-Sitzventile 7 und 8 und die beiden Auslaß-Sitzventile 10 und 11 sind nur schematisch dargestellt. So ist auch der Schließkörper 35 des Auslaß-Sitzventils 10 mit seinem Betätigungsstößel 34 als einteiliges Bauteil dargestellt.

Im Gegensatz zu dem Ausführungsbeispiel der Fig. 2 sind in dem Ausführungsbeispiel der Fig. 3 die Begrenzungskolben 39 und 39A nicht koaxial zu den Einlaß- und Auslaß-Sitzventilen angeordnet, sondern parallel zu diesen. Damit wirken die Begrenzungskolben 39, 39A direkt auf die Betätigungseinrichtung 22, die in diesem Ausführungsbeispiel durch eine Verlängerung des Lagerzapfens des Ritzels 44 und ein darauf befestigtes zusätzliches Lager gebildet ist. Die Funktion und Wirkungsweise dieses Ausführungsbeispiels sind analog zu denen des Ausführungsbeispiels in Fig. 2.

### Bezugszeichen

- 1: Lenkventil
- 2: Speicher
- 3: Arbeitsraum
- 4: Arbeitsraum
- 5: Servomotor
- 6: Druckmittelbehälter
- 7: Einlaß-Sitzventil
- 8: Einlaß-Sitzventil
- 9: -
- 10: Auslaß-Sitzventil
- 11: Auslaß-Sitzventil
- 12, 12A: Schließkörper von 7, 8
- 13, 13A: Zuhaltefeder
- 14, 14A: Ventilsitz
- 15: Bund
- 16: Betätigungsstößel
- 17: Schließkörper von 10, 11
- 18: Ventilsitz
- 19: -
- 20: Federteller
- 21: Begrenzungsfeder
- 22: Betätigungseinrichtung
- 23: Begrenzungskolben
- 24: Anschlagschulter
- 25: Begrenzungsraum
- 26: Druckfeder
- 27: Zulaufkammer
- 28: Kammer
- 29: -
- 30: Federteller
- 31: Begrenzungsfeder
- 32: Scheibe
- 33: -
- 34, 34A: Betätigungsstößel
- 35, 35A: Schließkörper
- 36, 36A: Betätigungsstift
- 37: Ventilgehäuse
- 38: Ventilsitz
- 39, 39A: Begrenzungskolben
- 40: Zulaufkammer
- 41: Kammer
- 42, 42A: Begrenzungsraum
- 43: Lenkgehäuse
- 44: Ritzel
- 45: Lager
- 46: Lager
- 47: Lenkspindelanschluß
- 48: Zahnstange
- 49: -
- 50: Servomotor
- 51: Kolbenstange
- 52: Arbeitsraum
- 53: Arbeitsraum
- 54: Arbeitsleitung
- 55: Arbeitsleitung
- 56: Arbeitsanschluß
- 57: Arbeitsanschluß
- 58: Zulaufanschluß
- 59: -
- 60: Rücklaufanschluß

## Patentansprüche

1. Hilfskraftlenkung für Kraftfahrzeuge, mit einem Lenkventil (1), das zwei Einlaß-Sitzventile (7, 8) und zwei Auslaß-Sitzventile (10, 11) aufweist, die über eine Betätigungseinrichtung (22) in Abhängigkeit von einer Drehbewegung einer Lenkspindel verstellbar sind,
- wobei die Schließkörper (12, 12A) der Einlaß-Sitzventile (7, 8) durch die Kraft von Zuhaltefedern (13) in Schließrichtung beaufschlagbar und dadurch in der Neutralstellung des Lenkventils (1) geschlossen sind,
- wobei die Auslaß-Sitzventile (10, 11) in der Neutralstellung des Lenkventils (1) geöffnet sind und
- wobei die Einlaß-Sitzventile (7, 8) erst nach dem Schließen des jeweiligen zugehörigen Auslaß-Sitzventils (10, 11) geöffnet werden,
dadurch **gekennzeichnet,**
- daß für jede Seite des Lenkventils (1) ein Begrenzungskolben (23; 39, 39A) vorgesehen ist,
- daß jeder Begrenzungskolben (23; 39, 39A) einerseits von dem in einem Arbeitsraum (3, 4) eines Servomotors (5) herrschenden Servodruck und andererseits von einer Begrenzungsfeder (21; 31, 31A) beaufschlagt ist, die unterhalb einer bestimmten Höhe des Servodruckes den Begrenzungskolben (23; 39, 39A) in einem Abstand von der Betätigungseinrichtung (22) bzw. von Teilen, die mit der Betätigungseinrichtung (22) in Wirkverbindung stehen, hält,
- daß der Begrenzungskolben (23; 39, 39A) dann an der Betätigungseinrichtung (22) bzw. an Teilen, die mit der Betätigungseinrichtung (22) in Wirkverbindung stehen, anliegt und auf die Betätigungseinrichtung (22) einwirkt, wenn die Kraft des auf den Begrenzungskolben (23; 39, 39A) wirkenden Servodruckes die Kraft der Begrenzungsfeder (21; 31, 31A) übersteigt und
- daß der Querschnitt des Begrenzungskolbens (23; 39, 39A) kleiner ist als der wirksame Querschnitt des Schließkörpers (12) des Einlaß-Sitzventils (8) (Fig. 1 bis 3).

2. Hilfskraftlenkung für Kraftfahrzeuge nach dem Oberbegriff des Anspruches 1, wobei die Schließkörper (17; 35, 35A) der Auslaß-Sitzventile (10, 11) und deren Betätigungsstößel (16; 34, 34A) durch die Kraft von Druckfedern in Richtung auf die Betätigungseinrichtung (22) beaufschlagt sind, so daß die Betätigungsstößel (16; 34, 34A) an der Betätigungseinrichtung (22) anliegen, dadurch **gekennzeichnet,**
- daß für jede Seite des Lenkventils (1) ein Begrenzungskolben (23; 39, 39A) vorgesehen ist,
- daß jeder Begrenzungskolben (23; 39, 39A) einerseits von dem in einem Arbeitsraum (3, 4) eines Servomotors (5) herrschenden Servodruckes und andererseits von einer Begrenzungsfeder (21; 31, 31A) beaufschlagt ist, die unterhalb einer bestimmten Höhe des Servodruckes den Begrenzungskolben (23; 39, 39A) in einem Abstand von dem Schließkörper (17; 35, 35A) des Auslaß-Sitzventils (10, 11) bzw. von Teilen, die mit dem Schließkörper in Wirkverbindung stehen, hält,
- daß der Begrenzungskolben (23; 39, 39A) dann an dem Schließkörper (17; 35, 35A) des Auslaß-Sitzventils (10, 11) bzw. an Teilen, die mit dem Schließkörper in Wirkverbindung stehen, anliegt und auf diesen bzw. diese und damit auf die Betätigungseinrichtung (22) einwirkt, wenn die Kraft des auf den Begrenzungskolben (23; 39, 39A) wirkenden Servodruckes die Kraft der Begrenzungsfeder (21; 31, 31A) übersteigt und
- daß der Querschnitt des Begrenzungskolbens (23; 39, 39A) kleiner ist als der wirksame Querschnitt des Schließkörpers (12) des Einlaß-Sitzventils (8) (Fig. 1 und 2).

3. Hilfskraftlenkung nach einem der Ansprüche 1 oder 2, dadurch **gekennzeichnet,** daß jeder Begrenzungskolben (23) andererseits von einer Begrenzungsfeder (21) beaufschlagt ist, die in Neutralstellung des Lenkventils (1) den Begrenzungskolben (23) an eine Anschlagschulter (24) eines das Lenkventil (1) aufnehmenden Ventilgehäuses anlegt (Fig. 1).

4. Hilfskraftlenkung nach einem der Ansprüche 2 oder 3, dadurch **gekennzeichnet,** daß die Begrenzungsfedern (21; 31, 31A) die Schließkörper (17; 35, 35A) der Auslaß-Sitzventile (10, 11) und deren Betätigungsstößel (16; 34, 34A) in Richtung auf die Betätigungseinrichtung (22) beaufschlagen (Fig. 1 und 2).

5. Hilfskraftlenkung nach einem der Ansprüche 2 oder 3, dadurch **gekennzeichnet,** daß die Begrenzungsfedern (21; 31, 31A) als Zentrierfedern für das Lenkventil (1) wirken (Fig. 1 und 2).

6. Hilfskraftlenkung nach einem der Ansprüche 1 bis 5, dadurch **gekennzeichnet,** daß die Einlaß-Sitzventile (7, 8) durch die Kraft der Begrenzungsfedern (21; 31, 31A) aufsteuerbar sind (Fig. 1).

7. Hilfskraftlenkung nach einem der Ansprüche 1 bis 5, dadurch **gekennzeichnet,** daß die Einlaß-Sitzventile (7, 8) durch Formschluß über eine Bewegung der Betätigungseinrichtung (22) aufsteuerbar sind (Fig. 2 und 3).

## Claims

1. Power-assisted steering system for motor vehicles, having a steering valve (1) comprising two inlet seat valves (7, 8) and two outlet seat valves (10, 11), which are adjustable by means of an operating device (22) in dependence upon a rotational movement of a steering spindle,
- wherein the closing bodies (12, 12A) of the inlet seat valves (7, 8) are loadable in closing direction by the force of locking springs (13) and are therefore closed in the neutral position of the steering valve (1),
- wherein the outlet seat valves (10, 11) are open in the neutral position of the steering valve (1) and
- wherein the inlet seat valves (7, 8) are opened only after closure of the respective associated outlet seat valve (10, 11),
characterized in
- that a limiting piston (23; 39, 39A) is provided for each side of the steering valve (1),
- that each limiting piston (23; 39, 39A) is loaded on the one hand by the servo pressure prevailing in a working chamber (3, 4) of a servomotor (5) and on the other hand by a limiting spring (21; 31, 31A), which below a specific level of the servo pressure holds the limiting piston (23; 39, 39A) at a distance from the operating device (22) or from parts operationally connected to the operating device (22),
- that the limiting piston (23; 39, 39A) then lies against the operating device (22) or against parts operationally connected to the operating device (22) and acts upon the operating device (22) when the force of the servo pressure acting upon the limiting piston (23; 39, 39A) exceeds the force of the limiting spring (21; 31, 31A) and
- that the cross section of the limiting piston (23; 39, 39A) is smaller than the effective cross section of the closing body (12) of the inlet seat valve (8) (Figs. 1 to 3).

2. Power-assisted steering system for motor vehicles according to the preamble of claim 1, wherein the closing bodies (17; 35, 35A) of the outlet seat valves (10, 11) and their operating plungers (16; 34, 34A) are loaded by the force of pressure springs in the direction of the operating device (22) so that the operating plungers (16; 34, 34A) lie against the operating device (22), characterized in
- that a limiting piston (23; 39, 39A) is provided for each side of the steering valve (1),
- that each limiting piston (23; 39, 39A) is loaded on the one hand by the servo pressure prevailing in a working chamber (3, 4) of a servomotor (5) and on the other hand by a limiting spring (21; 31, 31A), which below a specific level of the servo pressure holds the limiting piston (23; 39, 39A) at a distance from the closing body (17; 35, 35A) of the outlet seat valve (10, 11) or from parts operationally connected to the closing body,
- that the limiting piston (23; 39, 39A) then lies against the closing body (17; 35, 35A) of the outlet seat valve (10, 11) or against parts operationally connected to the closing body and acts upon said closing body or said parts and hence upon the operating device (22) when the force of the servo pressure acting upon the limiting piston (23; 39, 39A) exceeds the force of the limiting spring (21; 31, 31A) and
- that the cross section of the limiting piston (23; 39, 39A) is smaller than the effective cross section of the closing body (12) of the inlet seat valve (8) (Figs. 1 and 2).

3. Power-assisted steering system according to one of claims 1 or 2, characterized in that each limiting piston (23) is loaded on the other hand by a limiting spring (21) which, in the neutral position of the steering valve (1), applies the limiting piston (23) against a stop shoulder (24) of a valve housing which accommodates the steering valve (1) (Fig. 1).

4. Power-assisted steering system according to one of claims 2 or 3, characterized in that the limiting springs (21; 31, 31A) load the closing bodies (17; 35, 35A) of the outlet seat valves (10, 11) and their operating plungers (16; 34, 34A) in the direction of the operating device (22) (Figs. 1 and 2).

5. Power-assisted steering system according to one of claims 2 or 3, characterized in that the limiting springs (21; 31, 31A) act as centring springs for the steering valve (1) (Figs. 1 and 2).

6. Power-assisted steering system according to one of claims 1 to 5, characterized in that the inlet seat valves (7, 8) are openable by the force of the limiting springs (21; 31, 31A) (Fig. 1).

7. Power-assisted steering system according to one of claims 1 to 5, characterized in that the inlet seat valves (7, 8) are openable by positive engagement by means of a movement of the operating device (22) (Figs. 2 and 3).

## Revendications

1. Direction assistée pour véhicules à moteur comportant une soupape de direction (1) présentant deux soupapes d'admission à sièges (7, 8) et deux soupapes d'échappement à sièges (10, 11) qui peuvent être réglées par un dispositif d'activation (22) en fonction d'un mouvement de rotation d'un arbre de direction,
- où les organes de fermeture (12, 12A) des soupapes d'admission à sièges (7, 8) peuvent être sollicités par la force de ressorts de verrouillage (13) dans le sens de la fermeture et sont de ce fait fermés pendant que la soupape de direction (1) se trouve en position neutre,
- où les soupapes d'échappement à sièges (10, 11) sont ouvertes pendant que la soupape de direction (1) est en position neutre, et
- où les soupapes d'admission à sièges (7, 8) ne s'ouvrent qu'après la fermeture de la soupape d'échappement à siège correspondante (10, 11),
**caractérisée en ce que**
- pour chaque côté de la soupape de direction (1) est prévu un piston de limitation (23; 39, 39A),
- chaque piston de limitation (23; 39, 39A) est sollicité d'une part par la pression asservie qui règne dans une chambre de travail (3, 4) d'un servomoteur (5) et d'autre part, par un ressort de limitation (21; 31, 31A) qui, en dessous d'une certaine valeur de la pression asservie, maintient le piston de limitation (23; 39, 39A) à une distance du dispositif d'activation (22), respectivement des organes se trouvant en relation active avec le dispositif d'activation (22),
- le piston de limitation (23; 39, 39A) est en contact avec le dispositif d'activation (22), respectivement avec des organes se trouvant en relation active avec le dispositif d'activation (22), et agit sur le dispositif d'activation (22) lorsque la force de la pression asservie agissant sur le piston de limitation (23; 39, 39A) dépasse la force du ressort de limitation (21; 31, 31A), et
- la section du piston de limitation (23; 39, 39A) est inférieure à la section utile de l'organe de fermeture (12) de la soupape d'admission à sièges (8) (figures 1 à 3).

2. Direction assistée pour véhicules à moteur selon le préambule de revendication 1, où les organes de fermeture (17; 35, 35A) des soupapes d'échappement à sièges (10, 11) et leurs poussoirs d'actionnement (16; 34, 34A) sont sollicités par la force de ressorts à pression en direction de dispositif d'activation (22) de telle façon que les poussoirs d'actionnement (16; 34, 34A) sont en appui sur le dispositif d'activation (22), **caractérisée en ce** que
- pour chaque côté de la soupape de direction (1) est prévu un piston de limitation (23, 39, 39A),
- chaque piston de limitation (23; 39, 39A) est sollicité d'une part par la pression asservie qui règne dans une chambre de travail (3, 4) d'un servomoteur (5) et d'autre part, par un ressort de limitation (21; 31, 31A) qui, en dessous d'une certaine valeur de la pression asservie, maintient le piston de limitation (23; 39, 39A) à une distance de l'organe de fermeture (17; 35, 35A) de la soupape d'échappement à sièges (10, 11), respectivement des organes se trouvant en relation active avec le l'organe de fermeture,
- le piston de limitation (23; 39, 39A) est en contact avec l'organe de fermeture (17; 35, 35A) de la soupape d'échappement à sièges (10, 11), respectivement avec des organes se trouvant en relation active avec l'organe de fermeture, et agit sur celui-ci, respectivement sur ceux-ci, et donc sur le dispositif d'activation (22), lorsque la force de la pression asservie dépasse la force du ressort de limitation (21; 31, 31A), et
- la section du piston de limitation (23; 39, 39A) est inférieure à la section utile de l'organe de fermeture (12) de la soupape d'admission à sièges (8) (figures 1 et 2).

3. Direction assistée selon l'une des revendications 1 ou 2, **caractérisée en ce que** chaque piston de limitation (23) est sollicité d'autre part par un ressort de limitation (21) qui, en position neutre de la soupape de direction (1), pousse le piston de limitation (23) contre un épaulement de butée (24) d'un boîtier recevant la soupape de direction (1) (figure 1).

4. Direction assistée selon l'une des revendications 2 ou 3, **caractérisée en ce que** les ressorts de limitation (21; 31, 31A) sollicitent les organes de fermeture (17; 35, 35A) des soupapes d'échappement à sièges (10, 11) et leurs poussoirs d'actionnement (16; 34, 34A) en direction du dispositif d'activation (22) (figures 1 et 2).

5. Direction assistée selon l'une des revendications 2 ou 3, **caractérisée en ce que** les ressorts de limitation (21; 31, 31A) agissent comme ressorts de centrage pour la soupape de direction (1) (figures 1 et 2).

6. Direction assistée selon l'une des revendications 1 à 5, **caractérisée en ce que** les soupapes d'admission à sièges (7, 8) peuvent être commandées par la force des ressorts de limitation (21; 31, 31A) (figure 1).

7. Direction assistée selon l'une des revendications 1 à 5, **caractérisée en ce que** les soupapes d'admission à sièges (7, 8) peuvent être commandées par fermeture géométrique au moyen d'un mouvement du dispositif d'activation (22) (figures 2 et 3).
